# EUROPEAN PATENT APPLICATION

(11) **EP 4 468 655 A1**
(43) Date of publication of application: **27.11.2024**
(21) Application number: 24165678.4
(22) Date of filing: 22.03.2024
(51) Int. Cl.: H04L 9/40, G06F 1/3231, G06F 1/3234, G06F 21/32

(54) **INFORMATION PROCESSING APPARATUS AND CONTROL METHOD**

(30) Priority: 26.05.2023 JP 2023086810
(71) Applicant: Lenovo (Singapore) Pte. Ltd., New Tech Park 556741 (SG)
(72) Inventor: NISHIO, Masashi, Yokohama-shi, 220-0012 (JP)
(74) Representative: Openshaw & Co.

(57) **Abstract**

An information processing apparatus executes person detection processing and face authentication processing to detect a face area with a face captured therein from a captured image in order to detect the presence of a person, instructs a transition of an operating state of the system and to change the screen brightness based on the detection result, and unlocks the system based on the authentication result. When the person is no longer detected, the apparatus reduces the screen brightness, locks the system before a first time period elapses and starts the unlocking processing using the face authentication processing, and causes the system to transition to a standby state after the first time period has elapsed. The apparatus continues the state of reducing the screen brightness regardless of the person detection processing in response to the system being locked in the state where the screen brightness is reduced.

## Description

### BACKGROUND OF THE INVENTION

### Field of the Invention

The present invention relates to an information processing apparatus and a control method.

### Description of the Related Art

For example, Japanese Unexamined Patent Application Publication No. 2016-148895 discloses an apparatus which detects that a person has approached or has moved away using an infrared sensor to make a transition to a usable state when detecting that the person has approached or to a state with reduced power consumption when detecting that the person has moved away. Further, in recent years, with the development of computer vision and the like, detection accuracy when detecting a face from an image has been getting higher. Therefore, the detection of a person by detecting a face from a captured image using an imaging sensor such as a camera is also performed instead of person detection by the infrared sensor. The detection of a person by face detection can detect that it is a person more accurately.

Further, in recent years, a function to reduce power consumption by reducing the brightness of a display unit (display) has been attracting attention due to expectations for ESG (Environment, Social, Governance). For example, there is an information processing apparatus such as a personal computer to perform control to reduce the screen brightness of a display when a person has moved away or when a face is facing sideways even though the person is present.

### SUMMARY OF THE INVENTION

For example, when a person is no longer detected from a state where the person is detected (that is, when the person has moved away), the information processing apparatus such as the personal computer performs control to reduce the screen brightness in order to reduce power consumption and to make a transition to a standby state after a certain period of time has elapsed from the start of predetermined measurement. However, depending on the system, there is a problem that music being played back or voice or the like being delivered by podcast is stopped when the transition to the standby state is made.

As a countermeasure therefor, it can be considered to keep the system locked without making the transition to the standby state, but in this case, face authentication processing may be executed by a system request as authentication processing to unlock the system. Here, a camera cannot be used at the same time for face authentication processing by the system request and person detection processing by face detection depending on the system. In this case, since the use of the camera is given priority to the face authentication processing by the system request, the person detection processing by face detection cannot be performed. Since the camera cannot be used in the person detection processing, there is a problem that the reduced screen brightness is restored to the screen brightness before being reduced when the control by the person detection processing is disabled.

The present invention has been made in view of the above circumstances, and it is an object thereof to provide an information processing apparatus and a control method capable of properly performing control of the screen brightness and control of the operation of a system using face detection.

The present invention has been made to solve the above problem, and an information processing apparatus according to the first aspect of the present invention includes: a memory which temporarily stores image data of an image captured by an imaging unit; a first processor which executes person detection processing to process the image data stored in the memory and to detect a face area with a face captured therein from the image in order to detect the presence of a person, and face authentication processing to detect the face area from the image in response to a request from a system in order to authenticate the face; a second processor which gives instructions to make a transition of an operating state of the system and to change the screen brightness of a display unit based on the detection result by the person detection processing; a third processor which executes unlocking processing to unlock the system based on the authentication result by the face authentication processing, wherein the first processor can use the image data of the image captured by the imaging unit exclusively between the person detection processing and the face authentication processing, the second processor executes brightness reduction processing to reduce the screen brightness when the person is no longer detected from a state where the person is detected by the person detection processing, system lock instruction processing to give an instruction to lock the system before a first time period elapses when the person is no longer detected from the state where the person is detected by the person detection processing, and standby state instruction processing to give an instruction to cause the system to make a transition to a standby state after the first time period has elapsed when the person is no longer detected from the state where the person is detected by the person detection processing, the third processor locks the system according to the instruction by the system lock instruction processing and starts the unlocking processing using the face authentication processing in response to the fact that the system is locked, and when the unlocking processing using the face authentication processing is started in response to the fact that the system is locked in the state where the screen brightness is reduced by the brightness reduction processing, the second processor continues the state of reducing the screen brightness regardless of the person detection processing.

The above information processing apparatus may be such that the first time period is set as a threshold value of a time period during which a state of none-use of a specific application running on the system and user activity by user input continues.

The above information processing apparatus may also be such that, when the unlocking processing using the face authentication processing is started in response to the fact that the system is locked in the state where the screen brightness is reduced by the brightness reduction processing, the second processor ignores the detection result by the person detection processing and continues the state of reducing the screen brightness.

The above information processing apparatus may further be such that, when input by a user is detected before the first time period elapses after the screen brightness is reduced, the second processor stops the brightness reduction processing and restores the screen brightness to that before being reduced.

Further, the above information processing apparatus may be such that, when the person is no longer detected from the state where the person is detected by the person detection processing, the second processor reduces the screen brightness in response to the fact that a second time period shorter than the first time period has elapsed, and gives the instruction to rock the system by the system lock instruction processing before the first time period elapses and after a third time period has elapsed since the screen brightness was reduced.

Further, the above information processing apparatus may be such that, when the system is unlocked by the unlocking processing, the second processor stops the brightness reduction processing and restores the screen brightness to that before being reduced.

Further, a control method according to the second aspect of the present invention is a control method for an information processing apparatus including: a memory which temporarily stores image data of an image captured by an imaging unit; a first processor which executes person detection processing to process the image data stored in the memory and to detect a face area with a face captured therein from the image in order to detect the presence of a person, and face authentication processing to detect the face area from the image in response to a request from a system in order to authenticate the face; a second processor which gives instructions to make a transition of an operating state of the system and to change the screen brightness of a display unit based on the detection result by the person detection processing; and a third processor which executes unlocking processing to unlock the system based on the authentication result by the face authentication processing, wherein the first processor can use the image data of the image captured by the imaging unit exclusively between the person detection processing and the face authentication processing, the control method including: a brightness reduction step of causing the second processor to reduce the screen brightness when the person is no longer detected from a state where the person is detected by the person detection processing; a system lock instruction step of causing the second processor to give an instruction to lock the system before a first time period elapses when the person is no longer detected from the state where the person is detected by the person detection processing; a standby state instruction step of causing the second processor to give an instruction to cause the system to make a transition to a standby state after the first time period has elapsed when the person is no longer detected from the state where the person is detected by the person detection processing; a step of causing the third processor to lock the system according to the instruction by the system lock instruction step and to start the unlocking processing using the face authentication processing in response to the fact that the system is locked; and a step of causing the second processor to continue the state of reducing the screen brightness regardless of the person detection processing when the unlocking processing using the face authentication processing is started in response to the fact that the system is locked in the state where the screen brightness is reduced by the brightness reduction step.

The above-described aspects of the present invention can properly perform control of the screen brightness and control of the operation of a system using face detection.

### BRIEF DESCRIPTION OF THE DRAWINGS

FIG. 1 is a perspective view illustrating a configuration example of the appearance of an information processing apparatus according to an embodiment.
FIG. 2 is a diagram illustrating an example of a person detection range of the information processing apparatus according to the embodiment.
FIG. 3 is a diagram for describing an overview of HPD processing of the information processing apparatus according to the embodiment.
FIG. 4 is a chart illustrating a control example upon detecting "Leave" according to the embodiment.
FIG. 5 is a schematic block diagram illustrating an example of the hardware configuration of the information processing apparatus according to the embodiment.
FIG. 6 is a schematic block diagram illustrating an example of the functional configuration of the information processing apparatus according to the embodiment.
FIG. 7 is a flowchart illustrating an example of screen brightness reduction processing upon detecting "Leave" according to the embodiment.

### DETAILED DESCRIPTION OF THE INVENTION

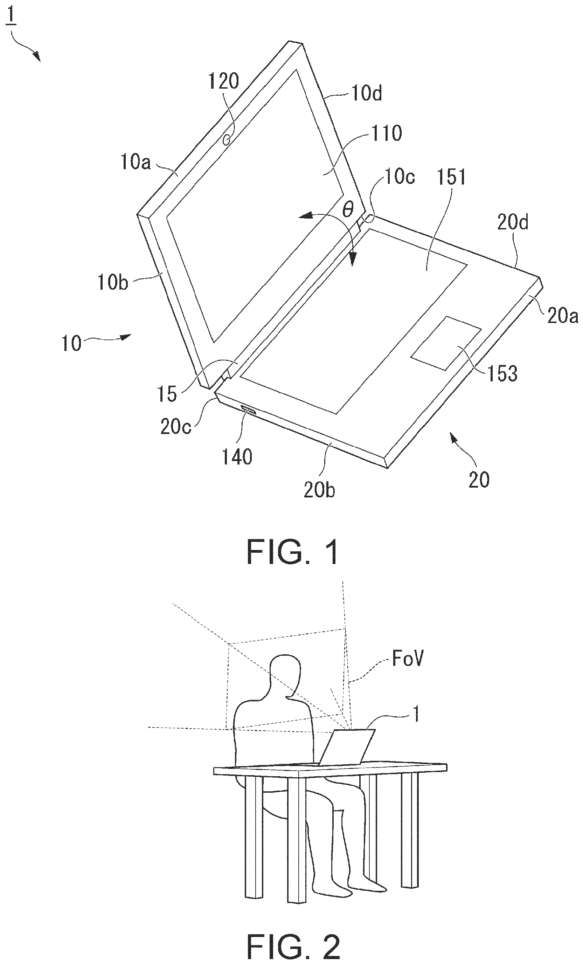

An embodiment of the present invention will be described below with reference to the accompanying drawings. FIG. 1 is a perspective view illustrating a configuration example of the appearance of an information processing apparatus 1 according to the present embodiment.

The information processing apparatus 1 is, for example, a laptop (clamshell) PC (Personal Computer). The information processing apparatus 1 includes a first chassis 10, a second chassis 20, and a hinge mechanism 15. The first chassis 10 and the second chassis 20 are joined by using the hinge mechanism 15. The first chassis 10 is rotatable around the rotation axis of the hinge mechanism 15 relative to the second chassis 20. An open angle by the rotation between the first chassis 10 and the second chassis 20 is denoted by "θ" in FIG. 1.

The first chassis 10 is also called A cover or a display chassis. The second chassis 20 is also called C cover or a system chassis. In the following description, side faces on which the hinge mechanism 15 is provided among side faces of the first chassis 10 and the second chassis 20 are referred to as side faces 10c and 20c, respectively. Among the side faces of the first chassis 10 and the second chassis 20, faces opposite to the side faces 10c and 20c are referred to as side faces 10a and 20a, respectively. In this figure, the direction from the side face 20a toward the side face 20c is referred to as "rear," and the direction from the side face 20c toward the side face 20a is referred to as "front." The right hand and left hand in the rearward direction are referred to as "right" and "left," respectively. Left side faces of the first chassis 10 and the second chassis 20 are referred to as side faces 10b and 20b, respectively, and right side faces thereof are referred to as side faces 10d and 20d, respectively. Further, a state where the first chassis 10 and the second chassis 20 overlap each other and are completely closed (a state of open angle θ = 0°) is referred to as a "closed state." The faces of the first chassis 10 and the second chassis 20 on the face-to-face sides in the closed state are referred to as respective "inner faces," and the faces opposite to the inner faces are referred to as "outer faces." Further, a state opposite to the closed state, where the first chassis 10 and the second chassis 20 are open, is referred to as an "open state."

The appearance of the information processing apparatus 1 in FIG. 1 illustrates an example of the open state. The open state is a state where the side face 10a of the first chassis 10 and the side face 20a of the second chassis 20 are separated. In the open state, the respective inner faces of the first chassis 10 and the second chassis 20 appear. The open state is one of states when a user uses the information processing apparatus 1, and the information processing apparatus 1 is often used in a state where the open angle is typically about θ = 100° to 130°. Note that the range of open angles θ to be the open state can be set arbitrarily according to the range of angles rotatable by the hinge mechanism 15 or the like.

A display unit 110 is provided on the inner face of the first chassis 10. The display unit 110 is configured to include a liquid crystal display (LCD) or an organic EL (Electro Luminescence) display, and the like. Further, an imaging unit 120 is provided in a peripheral area of the display unit 110 on the inner face of the first chassis 10. For example, the imaging unit 120 is arranged on the side of the side face 10a in the peripheral area of the display unit 110. Note that the position at which the imaging unit 120 is arranged is just an example, and it may be elsewhere as long as the imaging unit 120 can face a direction to face a display screen of the display unit 110.

In the open state, the imaging unit 120 images a predetermined imaging range in the direction to face the display screen of the display unit 110 (i.e., in front of the information processing apparatus 1). The predetermined imaging range is a range of angles of view defined by an image sensor included in the imaging unit 120 and a lens provided in front of the imaging surface of the image sensor. For example, the imaging unit 120 can capture an image including a person (user) present in front of the information processing apparatus 1.

Further, a power button 140 is provided on the side face 20b of the second chassis 20. The power button 140 is an operating element used by the user to give an instruction to power on or power off, make a transition from a standby state to a normal operating state, make a transition from the normal operating state to the standby state, or the like. The normal operating state is a system operating state capable of executing processing without being particularly limited, which corresponds, for example, to S0 state defined in the ACPI (Advanced Configuration and Power Interface) specification.

The standby state is a state in which at least part of system processing is limited and power consumption is lower than that in the normal operating state. For example, the standby state may be the standby state or a sleep state, Modern Standby in Windows (registered trademark), or a state corresponding to S3 state (sleep state) defined in the ACPI specification.

Further, a keyboard 151 and a touch pad 153 are provided on the inner face of the second chassis 20 as an input device to accept user operation input. Note that a touch sensor may also be provided as the input device instead of or in addition to the keyboard 151 and the touch pad 153, or a mouse and an external keyboard may be connected. When the touch sensor is provided, an area corresponding to the display screen of the display unit 110 may be constructed as a touch panel to accept operations. Further, a microphone used to input voice may be included in the input device.

Note that, in the closed state where the first chassis 10 and the second chassis 20 are closed, the display unit 110 and the imaging unit 120 provided on the inner face of the first chassis 10, and the keyboard 151 and the touch pad 153 provided on the inner face of the second chassis 20 are covered with each other's chassis faces, and put into a state of being disabled from fulfilling the functions.

The information processing apparatus 1 executes HPD (Human Presence Detection) processing to detect a person present in front of the information processing apparatus 1 based on a captured image captured by the imaging unit 120.

FIG. 2 is a diagram illustrating an example of a person detection range of the information processing apparatus 1 according to the present embodiment. In the illustrated example, a detection range FoV (Field of View: detection viewing angle) in front of the information processing apparatus 1 is a person detectable range.

For example, the information processing apparatus 1 detects a face area with a face captured therein from the captured image captured by the imaging unit 120 to determine whether or not a person (user) is present in front of the information processing apparatus 1. The detection range FoV corresponds to an imaging angle of view of the information processing apparatus 1. When the face area is detected from the captured image, the information processing apparatus 1 determines that the person (user) is present. On the other hand, when no face area is detected from the captured image, the information processing apparatus 1 determines that no person (user) is present.

The information processing apparatus 1 controls the operating state of the system of the information processing apparatus 1 depending on the presence or absence of a person (user) by the HPD processing. For example, when a person is present in front of the information processing apparatus 1, the information processing apparatus 1 controls the operating state to the normal operating state, while when no person is present in front of the information processing apparatus 1, the information processing apparatus 1 controls the operating state to the standby state.

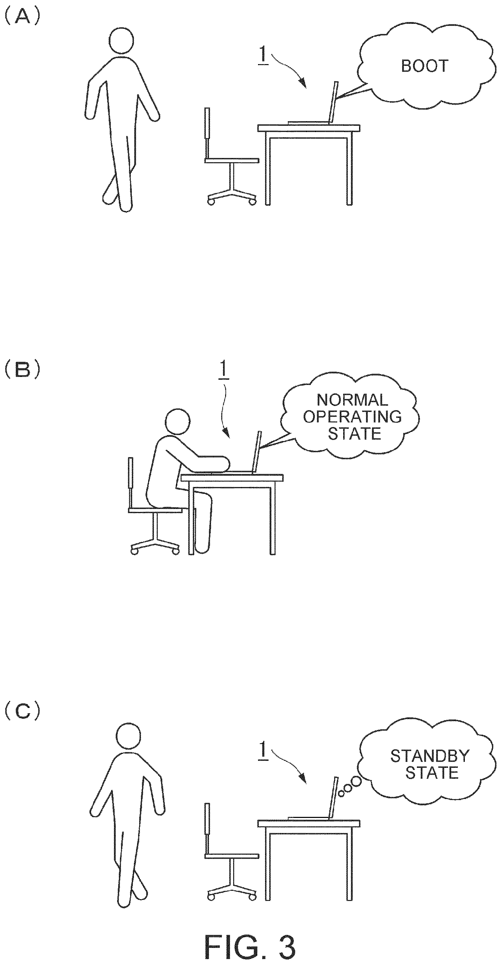

FIG. 3 is a diagram for describing an overview of HPD processing of the information processing apparatus 1 according to the present embodiment. The information processing apparatus 1 detects a person present in front of the information processing apparatus 1 by the HPD processing to control the operating state of the system of the information processing apparatus 1 based on the presence or absence of a person. For example, as illustrated in FIG. 3(A), when detecting a change from a state where no person is present in front of the information processing apparatus 1 (Absence) to a state where a person is present (Presence) in the standby state, that is, when detecting that a person has approached the information processing apparatus 1 (Approach), the information processing apparatus 1 automatically boots the system to make a transition to the normal operating state. Further, in a state where a person is present in front of the information processing apparatus 1 (Presence) in the normal operating state as illustrated in FIG. 3(B), the information processing apparatus 1 continues the normal operating state. Further, as illustrated in FIG. 3(C), when detecting a change from the state where the person is present in front of the information processing apparatus 1 (Presence) to the state where no person is present (Absence), that is, when detecting that the person has left the information processing apparatus 1 (Leave), the information processing apparatus 1 causes the system to make a transition to the standby state.

For example, when detecting the change from "Presence" to "Absence" (that is, when detecting "Leave"), the information processing apparatus 1 reduces the screen brightness of the display unit 110. Then, after a certain period of time has elapsed from the start of predetermined measurement, the information processing apparatus 1 turns off the display and makes the transition to the standby state. This processing to reduce the screen brightness in the HPD processing is called "screen brightness reduction processing."

Here, the original screen brightness before being reduced is, for example, a screen brightness in the state of "Presence," which is a screen brightness based on a brightness setting value initially set in the system, or a screen brightness based on a brightness setting value obtained by the user changing the brightness setting value. In the following, the screen brightness based on this initially-set brightness setting value or the brightness setting value obtained by the user changing the brightness setting value is called the "standard brightness." In contrast, a brightness reduced from the standard brightness is called the "low brightness." The brightness setting value of the low brightness is preset, which is set, for example, to a value of a screen brightness of about 0 to 10% of the standard brightness.

Here, when the transition to the standby state is made, since music being played back or voice or the like being delivered by podcast is stopped depending on the system, the information processing apparatus 1 locks the system once without making the transition to the standby state after reducing the screen brightness. Thus, the information processing apparatus 1 can continue the music being played back or voice or the like being delivered by podcast without being stopped.

Further, when the system is locked, the information processing apparatus 1 starts authentication processing (unlocking processing) to unlock the system. This authentication processing is authentication processing (for example, login authentication processing) by face authentication, fingerprint authentication, password authentication, or the like. Since the information processing apparatus 1 uses a camera for the face authentication processing, person detection processing by face detection cannot be performed. Therefore, the information processing apparatus 1 continues the state of reducing the screen brightness of the display unit 110 regardless of the person detection processing.

Further, when a state of no user activity (no use of a music playback app, no use of podcast, no input by the user, or the like) has lasted for a certain period of time after locking the system, the information processing apparatus 1 causes the system to make the transition to the standby state.

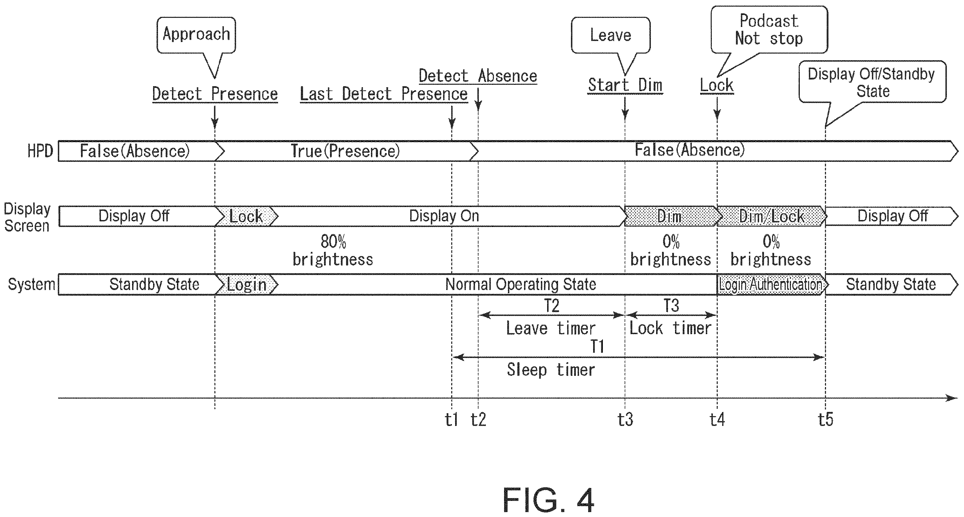

FIG. 4 is a timing chart illustrating a control example upon detecting "Leave" according to the present embodiment. Referring to this chart, screen brightness reduction processing and system operating state control processing upon detecting "Leave" will be described.

At time t1, the information processing apparatus 1 is in the normal operating state, and the screen brightness of the display unit 110 is controlled to the standard brightness (for example, 80% brightness). At time t1, the detection result of the HPD processing is True (Presence). However, when the detection result of the HPD processing becomes False (Absence) at time t2, since the detection result at time t1 is the last detected True (Presence), the measurement of a time period T1 using a sleep timer is started. The time period T1 is set as a threshold value (for example, 3 minutes) of a time period during which a state of no user activity continues.

Further, when the detection result of the HPD processing becomes False (Absence) at time t2, the measurement of a time period T2 using a leave timer is started. The time period T2 is a time period after the detection result of the HPD processing becomes False (Absence) until "Leave" is determined, which is set to a predetermined time period (for example, 18 seconds). Note that the time period T1 and the time period T2 may also be settable by the user.

When the time period T2 has elapsed while the detection result of the HPD processing remains False (Absence), the information processing apparatus 1 determines "Leave" at time t3. When "Leave" is determined, the information processing apparatus 1 starts screen brightness reduction processing (Start Dim) to reduce the screen brightness from the standard brightness to the low brightness (for example, 0% brightness).

Further, when "Leave" is determined at time t3, the information processing apparatus 1 starts measuring a time period T3 (for example, 5 seconds) using a lock timer, and when the time period T3 has elapsed while the detection result of the HPD processing remains False (Absence), the information processing apparatus 1 locks the system once at time t4 without making the transition to the standby state. Thus, the information processing apparatus 1 can continue the music being played back or voice or the like being delivered by podcast without being stopped.

Further, when the system is locked at time t4, the information processing apparatus 1 starts login authentication processing to unlock the system and continues the state of reducing the screen brightness of the display unit 110 regardless of the HPD processing.

When the time period T1 has elapsed in the state of no user activity (no music playback, no use of podcast, no input by the user, or the like), the information processing apparatus 1 turns off the display of the display unit 110 at time t5 and makes the transition to the standby state. In other words, since the information processing apparatus 1 does not make the transition to the standby state while the user activity continues, the music being played back or voice or the like being delivered by podcast can be continued without being stopped.

Although not illustrated in FIG. 4, when there is input to an HID (Human Interface Device) by the user (hereinafter called "HID input") before the time period T1 elapses, the information processing apparatus 1 determines that a person is present (Presence), and restores the screen brightness of the display unit 110 to the standard brightness before being reduced. HID input is input to the HID by the user, which is, for example, operation input to an input device 150 (for example, to the keyboard 151, the touch pad 153, or the like).

The configurations of the information processing apparatus 1 according to the present embodiment will be described in detail below.

### [Hardware Configuration of Information Processing Apparatus]

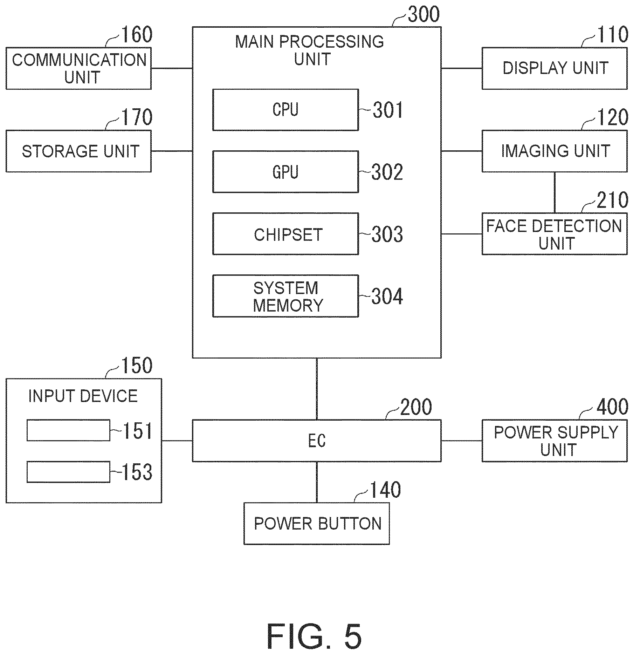

FIG. 5 is a schematic block diagram illustrating an example of the hardware configuration of the information processing apparatus 1 according to the present embodiment. In FIG. 5, components corresponding to respective units in FIG. 1 are given the same reference numerals. The information processing apparatus 1 is configured to include the display unit 110, the imaging unit 120, the power button 140, the input device 150, a communication unit 160, a storage unit 170, an EC (Embedded Controller) 200, a face detection unit 210, a main processing unit 300, and a power supply unit 400.

The display unit 110 displays display data (images) generated based on system processing executed by the main processing unit 300, processing of application programs running on the system processing, and the like.

The imaging unit 120 captures an image of an object within the predetermined imaging range (angle of view) in the direction (frontward) to face the inner face of the first chassis 10, and outputs the captured image to the main processing unit 300 and the face detection unit 210. For example, the imaging unit 120 includes a visible light camera (RGB camera) for capturing an image using visible light and an infrared camera (IR camera) for capturing an image using infrared light.

Note that the imaging unit 120 may be configured to include either one of the visible light camera and the infrared camera, or may be configured to include both of the visible light camera and the infrared camera.

The power button 140 outputs, to the EC 200, an operation signal according to a user operation. The input device 150 is an input unit for accepting user input, which is configured to include, for example, the keyboard 151 and the touch pad 153. In response to accepting operations on the keyboard 151 and the touch pad 153, the input device 150 outputs, to the EC 200, operation signals indicative of operation contents.

The communication unit 160 is connected to other devices communicably through a wireless or wired communication network to transmit and receive various data. For example, the communication unit 160 is configured to include a wired LAN interface such as Ethernet (registered trademark), a wireless LAN interface such as Wi-Fi (registered trademark), and the like.

The storage unit 170 is configured to include storage media, such as an HDD (Hard Disk Drive) or an SSD (Solid State Drive), a RAM (Random Access Memory), a ROM (Read Only Memory), and a flash ROM. The storage unit 170 stores the OS, device drivers, various programs such as applications, and various data acquired by the operation of the programs. For example, the brightness setting value of the screen brightness described above may also be stored in the storage unit 170.

The power supply unit 400 supplies power to each unit according to the operating state of each unit of the information processing apparatus 1. The power supply unit 400 includes a DC (Direct Current)/DC converter. The DC/DC converter converts the voltage of DC power, supplied from an AC (Alternate Current)/DC adapter or a battery (battery pack), to a voltage required for each unit. The power with the voltage converted by the DC/DC converter is supplied to each unit through each power system. For example, the power supply unit 400 supplies power to each unit through each power system based on a control signal input from the EC 200.

The EC 200 is a microcomputer configured to include a CPU (Central Processing Unit), a RAM (Random Access Memory), a ROM (Read Only Memory), an I/O (Input/Output) logic circuit, and the like. The CPU of the EC 200 reads a control program (firmware) prestored in the own ROM, and executes the read control program to fulfill the functionality. The EC 200 operates independently of the main system processing unit 300 to control the operation of the main processing unit 300 and manage the operating state of the main processing unit 300. Further, the EC 200 is connected to the power button 140, the input device 150, the power supply unit 400, and the like.

For example, the EC 200 communicates with the power supply unit 400 to acquire information on a battery state (remaining battery capacity, and the like) from the power supply unit 400 and to output, to the power supply unit 400, a control signal or the like in order to control the supply of power according to the operating state of each unit of the information processing apparatus 1. Further, the EC 200 acquires operation signals from the power button 140 and the input device 150, and outputs, to the main processing unit 300, an operation signal related to processing of the main processing unit 300 among the acquired operation signals.

The face detection unit 210 is configured to include a processor to execute HPD processing and face authentication processing based on image data of a captured image captured by the imaging unit 120. The face detection unit 210 acquires the image data of the captured image captured by the imaging unit 120, and temporarily stores the acquired image data in a memory. The memory in which the image data is stored may be a system memory 304, or an unillustrated memory in the face detection unit 210.

For example, the face detection unit 210 processes the image data of the captured image acquired from the imaging unit 120 and executes HPD processing (person detection processing) to detect a face area with a face captured therein from the captured image in order to detect the presence of a person. Further, the face detection unit 210 executes face authentication processing to detect the face area with the face captured therein from the captured image in order to authenticate the face. As the face detection method, any detection method using a face detection algorithm for detecting a face based on facial feature information, trained data (learned model) subjected to machine learning based on the facial feature information, a face detection library, or the like can be applied. Further, for example, as one of user authentication processing at the time of login authentication, the face detection unit 210 executes the face authentication processing in response to a request from the OS (Operating System).

The main processing unit 300 is configured to include a CPU (Central Processing Unit) 301, a GPU (Graphic Processing Unit) 302, a chipset 303, and the system memory 304, where processing of various application programs is executable on the OS (Operating System) by system processing based on the OS.

The CPU 301 is a processor to execute processing based on a BIOS program, processing based on the OS program, processing based on application programs running on the OS, and the like. For example, the CPU 301 executes boot processing to boot the system from the standby state and make the transition to the normal operating state, sleep processing to make the transition from the normal operating state to the standby state, and the like.

The GPU 302 is connected to the display unit 110. The GPU 302 executes image processing under the control of the CPU 301 to generate display data. The GPU 302 outputs the generated display data to the display unit 110.

The chipset 303 has a function as a memory controller, a function as an I/O controller, and the like. For example, the chipset 303 controls reading data from and writing data to the system memory 304, the storage unit 170, and the like by the CPU 301 and the GPU 302. Further, the chipset 303 controls input/output of data from the communication unit 160, the display unit 110, and the EC 200. Further, the chipset 303 has a function as a sensor hub. For example, the chipset 303 acquires, from the face detection unit 210, the detection result of the HPD processing, the authentication result of the face authentication processing, and the like.

The system memory 304 is used as a reading area of a program executed by the CPU 301 and a working area to write processed data. Further, the system memory 304 temporarily stores image data of a captured image captured by the imaging unit 120.

Note that the CPU 301, the GPU 302, and the chipset 303 may also be integrated as one processor, or some or each of them may be configured as an individual processor, respectively. For example, in the normal operating state, the CPU 301, the GPU 302, and the chipset 303 are all operating, but in the standby state, only at least some of the functions of the chipset 303 are operating.

### [Functional Configuration of Information Processing Apparatus]

Next, the functional configuration of the information processing apparatus 1 to perform screen brightness reduction processing and system operating state control processing by HPD processing will be described in detail.

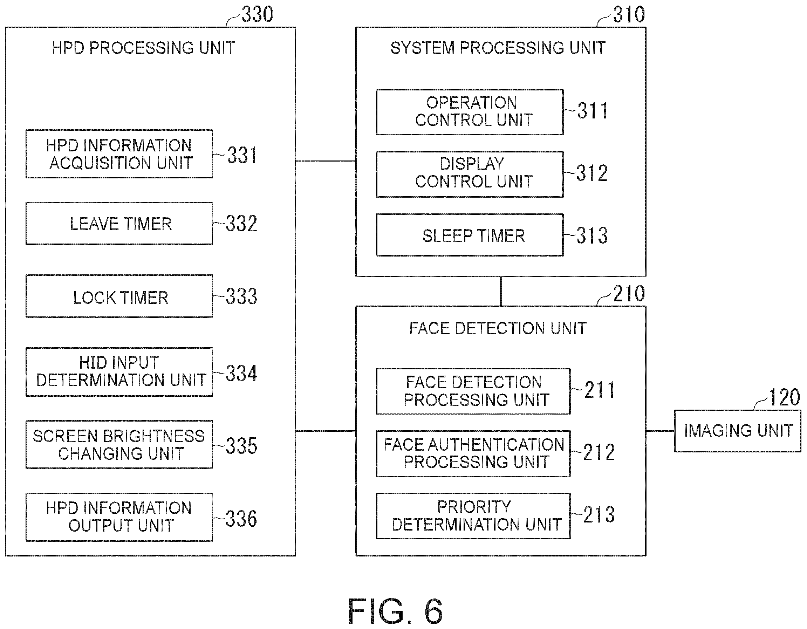

FIG. 6 is a schematic block diagram illustrating an example of the functional configuration of the information processing apparatus 1 according to the present embodiment. The information processing apparatus 1 includes the face detection unit 210, a system processing unit 310, and an HPD processing unit 330. The face detection unit 210 corresponds to the face detection unit 210 in FIG. 5, which processes image data of a captured image captured by the imaging unit 120 to execute the HPD processing and the face authentication processing by face detection. For example, the face detection unit 210 includes a face detection processing unit 211, a face authentication processing unit 212, and a priority determination unit 213.

The face detection processing unit 211 processes image data of a captured image acquired from the imaging unit 120 to execute face detection processing to detect a face area with a face captured therein from the captured image. When the face area is detected from the captured image, the face detection processing unit 211 outputs, to the HPD processing unit 330, "Presence" information indicating that a person is present in front of the information processing apparatus 1. On the other hand, when no face area is detected from the captured image, the face detection unit 210 outputs, to the HPD processing unit 330, "Absence" information indicating that no person is present in front of the information processing apparatus 1.

The face authentication processing unit 212 processes the image data of the captured image acquired from the imaging unit 120 to execute face authentication processing to detect the face area from the image in order to authenticate the face. For example, as one of user authentication processing at the time of OS login authentication, the face authentication processing unit 212 executes the face authentication processing in response to the request from the OS. The face authentication processing unit 212 outputs the authentication result to the system processing unit 310.

Here, the image data of the captured image captured by the imaging unit 120 can be used exclusively between the HPD processing and the face authentication processing in response to the request from the OS. Therefore, the priority determination unit 213 determines the priority of use of the image data of the captured image captured by the imaging unit 120. For example, the priority of use by the request of the OS is set higher. The priority determination unit 213 usually gives priority to the side of the HPD processing (when there is no request from the OS), and outputs the "Presence" information or the "Absence" information as the detection result from the face detection processing unit 211 to the HPD processing unit 330. On the other hand, when the face authentication processing unit 212 executes the face authentication processing in response to the request from the OS, the priority determination unit 213 gives priority to the use by the request of the OS, and outputs the authentication result from the face authentication processing unit 212 to the system processing unit 310. At this time, invalid data is output as the detection result from the face detection processing unit 211 to the HPD processing unit 330.

The HPD processing unit 330 includes an HPD information acquisition unit 331, a leave timer 332, a lock timer 333, an HID input determination unit 334, a screen brightness changing unit 335, and an HPD information output unit 336 as functional components implemented by the CPU 301 executing programs running on the OS or by the chipset 303 (for example, the sensor hub) executing programs.

The HPD information acquisition unit 331 acquires the "Presence" information, the "Absence" information, or the like output from the face detection unit 210 as the detection result of the HPD processing (person detection processing).

The leave timer 332 is a timer to measure the time period T2 (see FIG. 4) after the HPD information acquisition unit 331 acquires the "Absence" information until "Leave" is determined.

The lock timer 333 is a timer to measure the time period T3 (see FIG. 4) after "Leave" is determined until the system is locked.

The HID input determination unit 334 determines whether or not there is HID input. For example, the HID input determination unit 334 determines whether or not there is user operation input to the input device 150 (for example, to the keyboard 151, the touch pad 153, or the like). As an example, when the EC 200 acquires an operation signal output from the input device 150 (for example, the keyboard 151, the touch pad 153, or the like), the HID input determination unit 334 determines that there is HID input.

The screen brightness changing unit 335 changes the screen brightness of the display unit 110 by the HPD processing. When changing the screen brightness, the screen brightness changing unit 335 changes the brightness setting value stored in the storage unit 170. For example, in a state where the screen brightness of the display unit 110 is controlled to the standard brightness, when the HPD information acquisition unit 331 acquires the "Absence" information from the face detection unit 210 (that is, when the person is no longer detected from the state where the person is detected), the screen brightness changing unit 335 executes screen brightness reduction processing to reduce the screen brightness from the standard brightness to the low brightness. For example, when the HPD information acquisition unit 331 acquires the "Absence" information from the face detection unit 210, the screen brightness changing unit 335 reduces the screen brightness from the standard brightness to the low brightness in response to the fact that the time period T2 has elapsed.

Further, in a state where the screen brightness is reduced to the low brightness by the brightness reduction processing, when the login authentication processing using the face authentication processing is started in response to the fact that the system is locked, the screen brightness changing unit 335 continues the state of reducing the screen brightness regardless of the HPD processing. For example, when the priority of use of the image data of the captured image captured by the imaging unit 120 in the face detection unit 210 is given to the use by the request of the OS (use in the login authentication processing using the face authentication processing), the screen brightness changing unit 335 starts an "HPD disabled mode" to ignore the detection result by the HPD processing, and continues the state of reducing the screen brightness. In other words, the HPD disabled mode is a mode to ignore the detection result output from the face detection unit 210 and to continue the state of reducing the screen brightness.

Note that when the system is unlocked by the login authentication processing, the screen brightness changing unit 335 exits the HPD disabled mode. Then, the screen brightness changing unit 335 stops the brightness reduction processing based on the detection result output from the face detection unit 210 and restores the screen brightness to the standard brightness before being reduced.

Further, when it is determined that there is HID input before the time period T1 (see FIG. 4) elapses after the screen brightness is reduced to the low brightness, the screen brightness changing unit 335 stops the brightness reduction processing regardless of whether or not the mode is the HPD disabled mode, and restores the screen brightness to the standard brightness before being reduced. At this time, when the mode is the HPD disabled mode, the screen brightness changing unit 335 exits the HPD disabled mode, and restores the screen brightness to the standard brightness before being reduced.

Note that the screen brightness changing unit 335 restores the screen brightness to the standard brightness before being reduced even when the "Presence" information is acquired from the face detection unit 210 (that is, even when a person is detected) before the time period T3 (see FIG. 4) elapses (before the system is locked and the HPD disabled mode is started) after the screen brightness is reduced to the low brightness.

Further, when the system makes the transition to the standby state due to the fact that the time period T1 (see FIG. 4) has elapsed after the screen brightness was reduced to the low brightness, the screen brightness changing unit 335 exits the HPD disabled mode to enable bootup by the HPD processing.

Based on the "Presence" information, "Absence" information, or the like acquired by the HPD information acquisition unit 331, the HPD information output unit 336 outputs, to the system processing unit 310, information to instruct the system processing unit 310 on the operating state of the system.

For example, each time the HPD information output unit 336 acquires the "Presence" information or "Absence" information respectively acquired by the HPD information acquisition unit 331, the HPD information output unit 336 outputs the information to the system processing unit 310.

Further, when acquiring the "Presence" information from a state where the HPD information acquisition unit 331 is acquiring the "Absence" information, the HPD information output unit 336 outputs "Approach" information to the system processing unit 310.

Further, in a case where the HPD information acquisition unit 331 acquires the "Absence" information from a state where the HPD information acquisition unit 331 is acquiring the "Presence" information, when the time period T2 (see FIG. 4) has elapsed since the "Absence" information was acquired, the HPD information output unit 336 outputs "Leave" information to the system processing unit 310.

Further, when the HPD information acquisition unit 331 acquires the "Absence" information from the state where the HPD information acquisition unit 331 is acquiring the "Presence" information, the HPD information output unit 336 executes system lock instruction processing to give an instruction to lock the system before the time period T1 (see FIG. 4) elapses. For example, when the time period T3 (see FIG. 4) has elapsed after outputting the "Leave" information to the system processing unit 310 due to the fact that the time period T2 (see FIG. 4) has elapsed, the HPD information output unit 336 outputs, to the system processing unit 310, "Lock" information to give an instruction to lock the system by the system lock instruction processing.

The system processing unit 310 is a functional component implemented by the CPU 301 executing the BIOS and OS programs or programs running on the OS. For example, the system processing unit 310 includes an operation control unit 311, a display control unit 312, and a sleep timer 313 as functional components implemented by executing the OS program.

The operation control unit 311 controls the operating state of the system. For example, when the power button 140 is operated in the standby state, the operation control unit 311 boots the system from the standby state based on an operation signal acquired from the power button 140 through the EC 200. Further, the operation control unit 311 performs processing such as system shutdown, transition to the standby state, reboot, or the like based on an operation on a power menu (shutdown, sleep, reboot, or the like) of the OS displayed on the display unit 110 in the normal operating state.

Further, the operation control unit 311 controls the operating state of the system by the HPD processing. For example, when the "Presence" information is no longer acquired from the HPD processing unit 330 (that is, when the "Absence" information is acquired) in the normal operating state, the operation control unit 311 uses the sleep timer 313 to measure the elapsed time since the last "Presence" information was acquired, and makes the transition to the standby state after the time period T1 (see FIG. 4) has elapsed.

Note that the timing of the start of measuring the time period T1 by the sleep timer 313 may be when the last "Presence" information is acquired from the HPD processing unit 330, or when the "Absence" information is first acquired from the HPD processing unit 330. The timing of the start of measuring the time period T1 by the sleep timer 313 may further be when the "Leave" information is acquired from the HPD processing unit 330. The measurement of the time period T1 may be started at the time when HID input is last checked.

Further, the operation control unit 311 locks the system according to the instruction by the system lock instruction processing of the HPD processing unit 330. For example, the operation control unit 311 locks the system in response to the fact that the "Lock" information is acquired from the HPD processing unit 330.

Further, when the system is locked, the operation control unit 311 starts login authentication processing to unlock the system based on the authentication result by the user authentication. As the authentication processing to authenticate the user, authentication processing such as by face authentication, fingerprint authentication, password authentication, or the like can be applied. When performing the login authentication processing using the face authentication processing, the operation control unit 311 makes a request to the face detection unit 210 for the face authentication processing using the image data of the captured image captured by the imaging unit 120.

Further, in the login authentication processing, the operation control unit 311 unlocks the system based on the authentication result by the user authentication. For example, the operation control unit 311 unlocks the system based on the authentication result by the face authentication processing.

Note that when the "Presence" information is acquired from the HPD processing unit 330 before the elapse of the time period T1 (actually, before the elapse of the time period T2 and before the elapse of the time period T3), the operation control unit 311 ends the time measurement by the sleep timer 313, and continues the normal operating state. Further, when it is determined in the HPD processing unit 330 that there is HID input (that is, when input by the user is detected) before the elapse of the time period T1, the operation control unit 311 ends the time measurement by the sleep timer 313, and continues the normal operating state.

The display control unit 312 performs control to turn on and off the display of the display unit 110. Further, the display control unit 312 controls the screen brightness of the display unit 110 in the display-on state. Specifically, the display control unit 312 controls the screen brightness of the display unit 110 based on the brightness setting value stored in the storage unit 170. This brightness setting value is initially set in the system, but the brightness setting value can also be changed from the initial setting by the user depending on the usage environment and preference of the user. Further, this brightness setting value is changed by the HPD processing unit 330 (the screen brightness changing unit 335) .

### [Operation of Screen Brightness Reduction Processing]

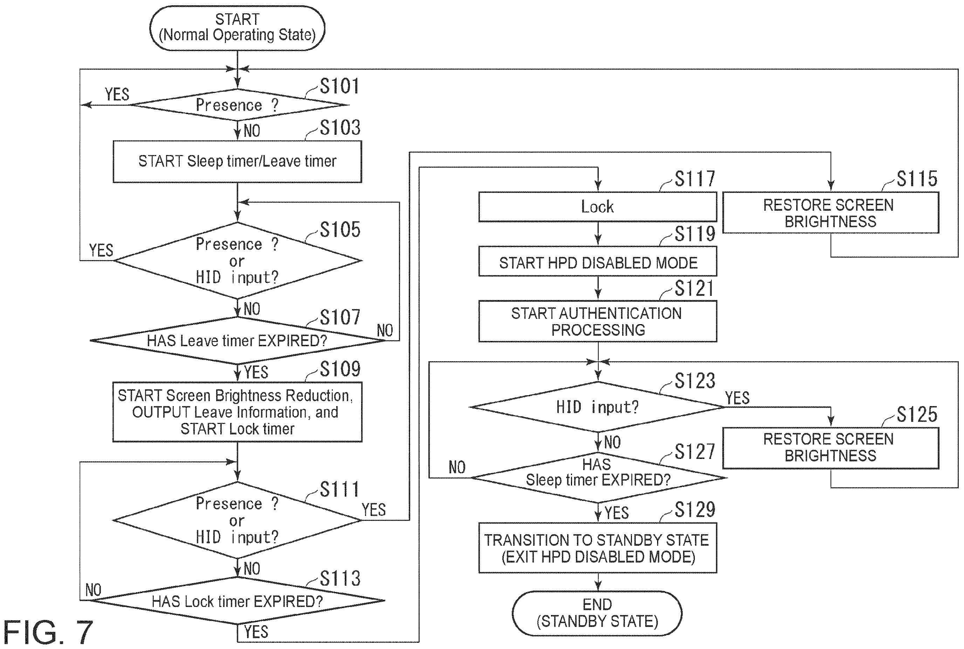

Referring next to FIG. 7, the operation of screen brightness reduction processing when "Leave" is detected by the HPD processing will be described. FIG. 7 is a flowchart illustrating an example of screen brightness reduction processing upon detecting "Leave" according to the present embodiment. Here, it is assumed that the information processing apparatus 1 is the state of "Presence" in the normal operating state, and the screen brightness of the display unit 110 is controlled to the standard brightness. The HPD processing unit 330 outputs the "Presence" information to the system processing unit 310 each time the "Presence" information is acquired from the face detection unit 210.

(Step S101) The HPD processing unit 330 determines whether or not the "Presence" information is acquired from the face detection unit 210. When determining that the "Presence" information is acquired (YES), the HPD processing unit 330 performs the process in step S101 again. On the other hand, when the "Absence" information is acquired from the face detection unit 210, the HPD processing unit 330 determines that the "Presence" information is not acquired (NO), and the procedure proceeds to a process in step S103. Further, the HPD processing unit 330 outputs the "Absence" information to the system processing unit 310 each time the "Absence" information is acquired.

(Step S103) When acquiring the "Absence" information from the HPD processing unit 330 in step S101, the system processing unit 310 uses the sleep timer 313 to start measuring the elapsed time (time period T1) since the last "Presence" information was acquired (starts the Sleep timer). Further, in response to the fact that the "Absence" information is acquired in step S101, the HPD processing unit 330 uses the leave timer 332 to start measuring the time period T2 (see FIG. 4) after acquiring the "Absence" information until determining "Leave" (starts the Leave timer). Then, the HPD processing unit 330 proceeds to a process in step S105.

(Step S105) The HPD processing unit 330 determines whether or not the "Presence" information is acquired from the face detection unit 210. Further, the HPD processing unit 330 determines whether or not there is HID input. Then, when determining that the "Presence" information is acquired (YES) or when determining that there is HID input (YES), the HPD processing unit 330 returns to the process in step S101, while when the determination is otherwise (NO), the HPD processing unit 330 proceeds to a process in step S107.

(Step S107) The HPD processing unit 330 determines whether or not the measurement of the time period T2 is ended (the Leave timer has expired). When determining that the measurement of the time period T2 is not ended (the Leave timer does not expire) (NO), the HPD processing unit 330 returns to the process in step S105. On the other hand, when determining that the measurement of the time period T2 is ended (the Leave timer has expired) (YES), the HPD processing unit 330 proceeds to a process in S109.

(Step S109) The HPD processing unit 330 starts the screen brightness reduction processing to reduce the brightness setting value of the screen brightness from the standard brightness to the low brightness. Further, the HPD processing unit 330 determines "Leave" and outputs the "Leave" information to the system processing unit 310 because the time period T2 has elapsed. Further, the HPD processing unit 330 uses the lock timer 333 to start measuring the time period T3 (see FIG. 4) after determining "Leave" until locking the system (starts the Lock timer). Then, the HPD processing unit 330 proceeds to a process in step Sill.

(Step S111) The HPD processing unit 330 determines whether or not the "Presence" information is acquired from the face detection unit 210. Further, the HPD processing unit 330 determines whether or not there is HID input. Then, when determining that the "Presence" information is acquired (YES) or when determining that there is HID input (YES), the HPD processing unit 330 proceeds to a process in step S115, while when the determination is otherwise (NO), the HPD processing unit 330 proceeds to a process in step S113.

(Step S113) The HPD processing unit 330 determines whether or not the measurement of the time period T3 is ended (the Lock timer has expired). When determining that the measurement of the time period T3 is not ended (the Lock timer has not expired) (NO), the HPD processing unit 330 returns to the process in step 5111. On the other hand, when determining that the measurement of the time period T3 is ended (the Lock timer has expired) (YES), the HPD processing unit 330 proceeds to a process in step S117.

(Step S115) The HPD processing unit 330 stops the screen brightness reduction processing, restores the brightness setting value of the screen brightness to the standard brightness, and returns to the process in step S101.

(Step S117) The HPD processing unit 330 outputs the "Lock" information to the system processing unit 310. The system processing unit 310 locks the system in response to the fact that the "Lock" information is acquired from the HPD processing unit 330. Then, the procedure proceeds to a process in step S119.

(Step S119) The HPD processing unit 330 starts the HPD disabled mode to ignore the detection result by the HPD processing and to continue the state where the screen brightness is reduced to the low brightness regardless of the HPD processing. For example, the HPD processing unit 330 fixes the brightness setting value of the screen brightness to the low brightness. Then, the procedure proceeds to a process in step S121.

(Step S121) The system processing unit 310 starts the login authentication processing in response to the fact that the system is locked. For example, the system processing unit 310 executes the login authentication processing by face authentication, fingerprint authentication, password authentication, or the like. Further, when performing the login authentication processing using face authentication, the system processing unit 310 makes a request to the face detection unit 210 for the face authentication processing using image data of a captured image captured by the imaging unit 120. The face detection unit 210 changes the priority of use of the image data of the captured image captured by the imaging unit 120 from the side of the HPD processing to the side of the login authentication processing. Then, the procedure proceeds to a process in step S123.

(Step S123) The HPD processing unit 330 determines whether or not there is HID input. Then, when determining that there is HID input (YES), the HPD processing unit 330 proceeds to a process in step S125. On the other hand, when determining that there is no HID input (NO), the procedure proceeds to a process in step S127.

(Step S125) The HPD processing unit 330 restores and fixes the brightness setting value of the screen brightness to the standard brightness, and returns to the process in step S123. In other words, after the login authentication processing is started in step S121, the login authentication processing is performed in the state where the screen brightness is reduced to the low brightness while there is no HID input, or the login authentication processing is performed in the state where the screen brightness is restored to the standard brightness when there is HID input. Note that when the state where there is no HID input continues for a certain amount of time or more after the brightness setting value of the screen brightness is restored to the standard brightness, the HPD processing unit 330 may change the brightness setting value of the screen brightness to the low brightness again.

(Step S127) The system processing unit 310 determines whether or not the measurement of the time period T1 is ended (the Sleep timer has expired). When the system processing unit 310 determines that the measurement of the time period T1 is not ended (NO), the procedure returns to the process in step S123. On the other hand, when the system processing unit 310 determines that the measurement of the time period T1 is ended (YES), the system processing unit 310 proceeds to a process in step S129.

Note that, when it is determined that there is HID input (step S123: YES) before it is determined in step S127 that the measurement of the time period T1 is ended and when the authentication by the login authentication processing is successful, the system processing unit 310 unlocks the system to make the transition to the normal operating state (transition to step S101) and to cancel the HPD disabled mode. On the other hand, when it is determined that there is no HID input (step S123: NO) before it is determined in step S127 that the measurement of the time period T1 is ended, the system processing unit 310 will continue the measurement of the time period T1 while keeping the state of reducing the screen brightness to the low brightness and the state of locking the system even if the authentication by the login authentication processing is successful.

In other words, in the state where there is no HID input, the system processing unit 310 continues the measurement of the time period T1 while keeping the state of reducing the screen brightness to the low brightness and the state of locking the system regardless of whether or not the authentication by the login authentication processing is successful, and when the measurement of the time period T1 is ended (when the Sleep timer has expired), the system processing unit 310 proceeds to the process in step S129. Further, when there is HID input, the system processing unit 310 continues the measurement of the time period T1 in such a state that the screen brightness is restored to the standard brightness and the system is locked, and when the measurement of the time period T1 is ended (when the Sleep timer has expired) while the authentication by the login authentication processing remains unsuccessful, the system processing unit 310 proceeds to the process in step S129. Note that when it is determined in step S123 that there is HID input, the measured value may be reset to remeasure the time period T1 started in step S103 using the sleep timer 313.

(Step S129) The system processing unit 310 controls the display of the display unit 110 to be turned off, and causes the system to make the transition to the standby state. Further, the HPD processing unit 330 exits the HPD disabled mode.

Note that when the authentication is successful in the login authentication processing started in step S121, the system processing unit 310 unlocks the system. Further, the HPD processing unit 330 restores the brightness setting value of the screen brightness to the standard brightness, and exits the HPD disabled mode. Then, the procedure returns to step S101.

### [Summary of Embodiment]

As described above, the information processing apparatus 1 according to the present embodiment includes a memory (for example, the system memory 304) which temporarily stores image data of a captured image captured by the imaging unit 120. The information processing apparatus 1 also includes the face detection unit 210 (an example of a first processor) which executes the HPD processing (an example of person detection processing) to process the image data stored in the memory and to detect a face area with a face captured therein from the captured image in order to detect the presence of a person, and face authentication processing to detect the face area from the captured image in response to a request from the system (for example, the OS) in order to authenticate the face. Further, the information processing apparatus 1 includes the HPD processing unit 330 (an example of a second processor, which is, for example, the chipset 303) to give instructions to make the transition of the operating state of the system and to change the screen brightness of the display unit 110 based on the detection result by the HPD processing, and the system processing unit 310 (an example of a third processor, which is, for example, the CPU 301) to execute the login authentication processing (an example of unlocking processing) in order to unlock the system based on the authentication result by the face authentication processing. Here, the face detection unit 210 can use the image data of the captured image captured by the imaging unit 120 exclusively between the HPD processing and the face authentication processing.

For example, the HPD processing unit 330 executes the brightness reduction processing to reduce the screen brightness when a person is no longer detected from a state where the person is detected by the HPD processing, the system lock instruction processing to give an instruction to lock the system before the time period T1 (an example of a first time period) elapses when the person is no longer detected from the state where the person is detected by the HPD processing, and standby state instruction processing to give an instruction to cause the system to make the transition to the standby state after the time period T1 has elapsed when the person is no longer detected from the state where the person is detected by the HPD processing. Further, the system processing unit 310 locks the system according to the instruction by the above system lock instruction processing and starts the login authentication processing using face authentication processing in response to the fact that the system is locked. Then, when the login authentication processing using the face authentication processing is started in response to the fact that the system is locked in a state where the screen brightness is reduced by the above brightness reduction processing, the HPD processing unit 330 continues the state of reducing the screen brightness regardless of the HPD processing.

Thus, when the person is no longer detected from the state where the person is detected (that is, when the person has moved away), since the information processing apparatus 1 can not only reduce power consumption by reducing the screen brightness but also keep the system in the locked state once, the information processing apparatus 1 can prevent the music being played back or voice or the like being delivered by podcast from being stopped, and can continue the state of reducing the screen brightness after the system is locked. Therefore, the information processing apparatus 1 can properly perform control of the screen brightness and control of the operation of the system using face detection.

For example, the time period T1 mentioned above is set as a threshold value of a time period during which a state of none-use of a specific application (for example, a music playback app, podcast, or the like) running on the system and user activity by HID input continues.

Thus, the information processing apparatus 1 can reduce the screen brightness when the person has moved away to prevent the user activity from being stopped while the user activity is continued.

Further, when the login authentication processing using the face authentication processing is started in response to the fact that the system is locked in the state where the screen brightness is reduced by the above brightness reduction processing, the HPD processing unit 330 ignores the detection result by the HPD processing and continues the state of reducing the screen brightness.

Thus, the information processing apparatus 1 can continue the state of reducing the screen brightness even when the login authentication processing by the system is executed.

Further, when HID input is detected before the time period T1 elapses after the screen brightness is reduced, the HPD processing unit 330 stops the brightness reduction processing and restores the screen brightness to that before being reduced.

Thus, the information processing apparatus 1 can restore the screen brightness to that before being reduced when the person comes back after the screen brightness is reduced due to the fact that the person has moved away.

Further, when the person is no longer detected from the state where the person is detected by the HPD processing, the HPD processing unit 330 reduces the screen brightness in response to the fact that the time period T2 (an example of a second time period) shorter than the time period T1 has elapsed, and gives the instruction to lock the system by the above system lock instruction processing before the time period T1 elapses and after the time period T3 (an example of a third time period) has elapsed since the screen brightness was reduced.

Thus, the information processing apparatus 1 can prevent not only the screen brightness from being unnecessarily reduced just because the person has moved away for a moment, but also the screen from unnecessarily making a transition to a lock screen.

Further, when the system is unlocked by the login authentication processing, the HPD processing unit 330 stops the brightness reduction processing and restores the screen brightness to that before being reduced.

Thus, when the person comes back again after the screen brightness is reduced because the person has moved away, the information processing apparatus 1 can restore the screen brightness to that before being reduced.

Further, a control method for the information processing apparatus 1 according to the present embodiment is a control method for the information processing apparatus 1 including: a memory (for example, the system memory 304) which temporarily stores image data of a captured image captured by the imaging unit 120; the face detection unit 210 (the example of the first processor); the HPD processing unit 330 (the example of the second processor, which is, for example, the chipset 303); and the system processing unit 310 (the example of the third processor, which is, for example, the CPU 301), the control method including: a step of causing the face detection unit 210 to execute the HPD processing (the example of the person detection processing) to process the image data stored in the memory and to detect a face area with a face captured therein from the captured image in order to detect the presence of a person; a step of causing the face detection unit 210 to execute face authentication processing to detect the face area from the captured image in response to a request from the system (for example, the OS) in order to authenticate the face; a step of causing the HPD processing unit 330 to give instructions to make the transition of the operating state of the system and to change the screen brightness of the display unit 110 based on the detection result by the HPD processing; and a step of causing the system processing unit 310 to execute the login authentication processing (the example of the unlocking processing) in order to unlock the system based on the authentication result by the face authentication processing. Here, the face detection unit 210 can use the image data of the captured image captured by the imaging unit 120 exclusively between the HPD processing and the face authentication processing.

For example, the control method for the information processing apparatus 1 further includes: a brightness reduction step of causing the HPD processing unit 330 to reduce the screen brightness when a person is no longer detected from a state where the person is detected by the HPD processing; a system lock instruction step of causing the HPD processing unit 330 to give an instruction to lock the system before the time period T1 (the example of the first time period) elapses when the person is no longer detected from the state where the person is detected by the HPD processing; a standby state instruction step of causing the HPD processing unit 330 to give an instruction to cause the system to make the transition to the standby state after the time period T1 has elapsed when the person is no longer detected from the state where the person is detected by the HPD processing; a step of causing the system processing unit 310 to lock the system according to the instruction by the above system lock instruction step and to start the login authentication processing using face authentication processing in response to the fact that the system is locked; and a step of causing the HPD processing unit 330 to continue the state of reducing the screen brightness regardless of the HPD processing when the login authentication processing using the face authentication processing is started in response to the fact that the system is locked in the state where the screen brightness is reduced by the above brightness reduction step.

Thus, when the person is no longer detected from the state where the person is detected (that is, when the person has moved away), since the control method for the information processing apparatus 1 can not only reduce power consumption by reducing the screen brightness but also keep the system in the locked state once without making the transition to the standby state, the music being played back or voice or the like being delivered by podcast can be prevented from being stopped, and the state of reducing the screen brightness can be continued after the system is locked. Therefore, the control method for the information processing apparatus 1 can properly perform control of the screen brightness and control of the operation of the system using face detection.

While the embodiment of this invention has been described in detail above with reference to the accompanying drawings, the specific configurations are not limited to those in the embodiment described above, and design changes are also included without departing from the scope of this invention. For example, the respective components described in the above-described embodiment can be combined arbitrarily.

Further, the configuration example in which the imaging unit 120 is built in the information processing apparatus 1 is described, but the present invention is not limited to this example. For example, the imaging unit 120 does not have to be built in the information processing apparatus 1, which may also be attachable to the information processing apparatus 1 (for example, onto any one of the side faces 10a, 10b, 10c, and the like) and communicably connected to the information processing apparatus 1 wirelessly or by wire as an external accessory of the information processing apparatus 1.

Further, in the aforementioned embodiment, the example in which the face detection unit 210 is provided separately from the CPU 301 and the chipset 303, but some or all of the functions of the face detection unit 210 may be provided in the chipset 303, or may be provided in a processor integrated with the CPU 301 or the chipset 303. For example, the CPU 301, the chipset 303, and the face detection unit 210 may be configured as individual processors, or configured to be integrated as one processor. Further, some or all of the functions of the face detection unit 210 may be provided in the EC 200.

Further, a hibernation state, a power-off state, and the like may be included as the standby state described above. The hibernation state corresponds, for example, to S4 state defined in the ACPI specification. The power-off state corresponds, for example, to S5 state (shutdown state) defined in the ACPI specification. Note that the standby state, the sleep state, the hibernation state, the power-off state, and the like as the standby state are states lower in power consumption than the normal operating state (states of reducing power consumption).

Note that the information processing apparatus 1 described above has a computer system therein. Then, a program for implementing the function of each component included in the information processing apparatus 1 described above may be recorded on a computer-readable recording medium so that the program recorded on this recording medium is read into the computer system and executed to perform processing in each component included in the information processing apparatus 1 described above. Here, the fact that "the program recorded on the recording medium is read into the computer system and executed" includes installing the program on the computer system. It is assumed that the "computer system" here includes the OS and hardware such as peripheral devices and the like. Further, the "computer system" may also include two or more computers connected through networks including the Internet, WAN, LAN, and a communication line such as a dedicated line. Further, the "computer-readable recording medium" means a storage medium such as a flexible disk, a magneto-optical disk, a portable medium like a flash ROM or a CD-ROM, or a hard disk incorporated in the computer system. Thus, the recording medium with the program stored thereon may be a non-transitory recording medium such as the CD-ROM.

Further, a recording medium internally or externally provided to be accessible from a delivery server for delivering the program is included as the recording medium. Note that the program may be divided into plural pieces, downloaded at different timings, respectively, and then united in each component included in the information processing apparatus 1, or delivery servers for delivering respective divided pieces of the program may be different from one another. Further, it is assumed that the "computer-readable recording medium" includes a medium on which the program is held for a given length of time, such as a volatile memory (RAM) inside a computer system as a server or a client when the program is transmitted through a network. The above-mentioned program may also be to implement some of the functions described above. Further, the program may be a so-called differential file (differential program) capable of implementing the above-described functions in combination with a program(s) already recorded in the computer system.

Further, some or all of the functions of the information processing apparatus 1 in the embodiment described above may be realized as an integrated circuit such as LSI (Large Scale Integration). Each function may be implemented by a processor individually, or some or all of the functions may be integrated as a processor. Further, the method of circuit integration is not limited to LSI, and it may be realized by a dedicated circuit or a general-purpose processor. Further, if integrated circuit technology replacing the LSI appears with the progress of semiconductor technology, an integrated circuit according to the technology may be used.

Further, the information processing apparatus 1 of the embodiment mentioned above is not limited to the laptop PC, which may be, for example, a desktop PC or the like. Description of Symbols
- 1: information processing apparatus
- 10: first chassis
- 20: second chassis
- 15: hinge mechanism
- 110: display unit
- 120: imaging unit
- 140: power button
- 150: input device
- 151: keyboard
- 153: touch pad
- 160: communication unit
- 170: storage unit
- 200: EC
- 210: face detection unit
- 211: face detection processing unit
- 212: face authentication processing unit
- 213: priority determination unit
- 300: main processing unit
- 301: CPU
- 302: GPU
- 303: chipset
- 304: system memory
- 310: system processing unit
- 311: operation control unit
- 312: display control unit
- 313: sleep timer
- 330: HPD processing unit
- 331: HPD information acquisition unit
- 332: leave timer
- 333: lock timer
- 334: HID input determination unit
- 335: screen brightness changing unit
- 336: HPD information output unit
- 400: power supply unit

## Claims

1. An information processing apparatus comprising:
a memory arranged to temporarily store image data of an image captured by an imaging unit;
a first processor arranged to execute person detection processing to process the image data stored in the memory and to detect a face area with a face captured therein from the image in order to detect presence of a person, and face authentication processing to detect the face area from the image in response to a request from a system in order to authenticate the face;
a second processor arranged to give instructions to make a transition of an operating state of the system and to change screen brightness of a display unit based on the detection result by the person detection processing; and
a third processor arranged to execute unlocking processing to unlock the system based on the authentication result by the face authentication processing, wherein
the first processor is arranged to use the image data of the image captured by the imaging unit exclusively between the person detection processing and the face authentication processing,
the second processor is arranged to execute:
brightness reduction processing to reduce the screen brightness when the person is no longer detected from a state where the person is detected by the person detection processing;
system lock instruction processing to give an instruction to lock the system before a first time period elapses when the person is no longer detected from the state where the person is detected by the person detection processing; and
standby state instruction processing to give an instruction to cause the system to make a transition to a standby state after the first time period has elapsed when the person is no longer detected from the state where the person is detected by the person detection processing,
the third processor is arranged to lock the system according to the instruction by the system lock instruction processing and start the unlocking processing using the face authentication processing in response to a fact that the system is locked, and
when the unlocking processing using the face authentication processing is started in response to the fact that the system is locked in a state where the screen brightness is reduced by the brightness reduction processing, the second processor is arranged to continue the state of reducing the screen brightness regardless of the person detection processing.

2. The information processing apparatus according to claim 1, wherein the first time period is set as a threshold value of a time period during which a state of none-use of a specific application running on the system and user activity by user input continues.

3. The information processing apparatus according to claim 1 or claim 2, wherein when the unlocking processing using the face authentication processing is started in response to the fact that the system is locked in the state where the screen brightness is reduced by the brightness reduction processing, the second processor is arranged to ignore the detection result by the person detection processing and continue the state of reducing the screen brightness.

4. The information processing apparatus according to any preceding claim, wherein when input by a user is detected before the first time period elapses after the screen brightness is reduced, the second processor is arranged to stop the brightness reduction processing and restore the screen brightness to that before being reduced.

5. The information processing apparatus according to any preceding claim, wherein when the person is no longer detected from the state where the person is detected by the person detection processing, the second processor is arranged to reduce the screen brightness in response to a fact that a second time period shorter than the first time period has elapsed, and give the instruction to lock the system by the system lock instruction processing before the first time period elapses and after a third time period has elapsed since the screen brightness was reduced.

6. The information processing apparatus according to any preceding claim, wherein when the system is unlocked by the unlocking processing, the second processor is arranged to stop the brightness reduction processing and restore the screen brightness to that before being reduced.

7. A control method for an information processing apparatus comprising:
a memory arranged to temporarily store image data of an image captured by an imaging unit;
a first processor arranged to execute person detection processing to process the image data stored in the memory and to detect a face area with a face captured therein from the image in order to detect presence of a person, and face authentication processing to detect the face area from the image in response to a request from a system in order to authenticate the face;
a second processor arranged to give instructions to make a transition of an operating state of the system and to change screen brightness of a display unit based on the detection result by the person detection processing; and
a third processor arranged to execute unlocking processing to unlock the system based on the authentication result by the face authentication processing,
wherein the first processor is arranged to use the image data of the image captured by the imaging unit exclusively between the person detection processing and the face authentication processing,
the control method comprising:
a brightness reduction step of causing the second processor to reduce the screen brightness when the person is no longer detected from a state where the person is detected by the person detection processing;
a system lock instruction step of causing the second processor to give an instruction to lock the system before a first time period elapses when the person is no longer detected from the state where the person is detected by the person detection processing;
a standby state instruction step of causing the second processor to give an instruction to cause the system to make a transition to a standby state after the first time period has elapsed when the person is no longer detected from the state where the person is detected by the person detection processing;
a step of causing the third processor to lock the system according to the instruction by the system lock instruction step and to start the unlocking processing using the face authentication processing in response to a fact that the system is locked; and
a step of causing the second processor to continue the state of reducing the screen brightness regardless of the person detection processing when the unlocking processing using the face authentication processing is started in response to the fact that the system is locked in the state where the screen brightness is reduced by the brightness reduction step.

8. The control method according to claim 7, wherein the first time period is set as a threshold value of a time period during which a state of none-use of a specific application running on the system and user activity by user input continues.

9. The control method according to claim 7 or claim 8, wherein when the unlocking processing using the face authentication processing is started in response to the fact that the system is locked in the state where the screen brightness is reduced by the brightness reduction processing, comprising causing the second processor to ignore the detection result by the person detection processing and continue the state of reducing the screen brightness.

10. The control method according to any one of claims 7 to 9, wherein when input by a user is detected before the first time period elapses after the screen brightness is reduced, comprising causing second processor to stop the brightness reduction processing and restore the screen brightness to that before being reduced.

11. The control method according to any one of claims 7 to 10, wherein when the person is no longer detected from the state where the person is detected by the person detection processing, comprising causing the second processor to reduce the screen brightness in response to a fact that a second time period shorter than the first time period has elapsed, and give the instruction to lock the system by the system lock instruction processing before the first time period elapses and after a third time period has elapsed since the screen brightness was reduced.

12. The control method according to any one of claims 7 to 11, wherein when the system is unlocked by the unlocking processing, comprising causing the second processor to stop the brightness reduction processing and restore the screen brightness to that before being reduced.
